# EUROPEAN PATENT APPLICATION

(11) **EP 4 184 358 A1**
(43) Date of publication of application: **24.05.2023**
(21) Application number: 21841341.7
(22) Date of filing: 18.03.2021
(51) Int. Cl.: G06F 21/56

(54) **VIRUS FEATURE EXTRACTION METHOD AND SYSTEM, AND STORAGE MEDIUM AND TERMINAL**

(30) Priority: 14.07.2020 CN 202010674327
(71) Applicant: Sangfor Technologies Inc., Shenzhen, Guangdong 518055 (CN)
(72) Inventor: WEI, Kaizhi, Shenzhen, Guangdong 518055 (CN); GUAN, Enyang, Shenzhen, Guangdong 518055 (CN); LIANG, Wenxiang, Shenzhen, Guangdong 518055 (CN)
(74) Representative: Müller Schupfner & Partner Patent- und Rechtsanwaltspartnerschaft mbB
(86) International application number: PCT/CN2021/081483
(87) International publication number: WO 2022/012070

(57) **Abstract**

A virus feature extraction method and system, and a computer-readable storage medium and a terminal. The extraction method comprises: acquiring virus files (S101); disassembling a suspect file in the virus files according to a disassembly unit, and performing security verification on the remaining virus files obtained after disassembly (S102); if the security verification is passed, switching a disassembly location of the suspect file, updating the disassembly unit (S103), and performing disassembly and security verification according to the updated disassembly unit; if the security verification fails, taking the remaining virus files as suspect files (S104), and performing disassembly and security verification; and if the disassembly unit is a single byte and the security verification of the remaining virus files fails, taking the remaining virus files as virus features (S105). By means of the method, a virus file can be repeatedly disassembled in automatic combination with a security verification result without manual input, so as to extract a virus feature, and manual verification and analysis do not need to be performed, thereby effectively improving the efficiency of virus feature extraction.

## Description

The present application claims priority to Chinese Patent Application No. 202010674327.2, titled "METHOD AND SYSTEM FOR EXTRACTING VIRUS SIGNATURE, COMPUTER READABLE STORAGE MEDIUM AND TERMINAL", filed on July 14, 2020 with the China National Intellectual Property Administration, which is incorporated herein by reference in its entirety.

### FIELD

The present disclosure relates to the field of network security, and in particular to a method and a system for extracting a virus signature, a computer readable storage medium and a terminal.

### BACKGROUND

The non-PE format is a file format for non-executable, such as pdf, doc, xls, and txt. At present, a virus signature in the non-PE format are extracted manually, which is time-consuming and labor-intensive. In addition, the quality of the manually extracted virus signature depends heavily on analysis ability of the security worker. Finally, the manual extraction is difficult to apply to scenarios in which the number of samples are increasing massively.

In view of this, there is an urgency to improve efficiency in extracting a virus signature by those skilled in the art.

### SUMMARY

A method and a system for extracting a virus signature, a computer readable storage medium and a terminal, so as to extract the virus signature automatically.

To improve the efficiency in extracting a virus signature, a method for extracting a virus signature is provided according to the present disclosure. The method includes: acquiring a malicious file; removing a removal unit from a suspicious file in the malicious file and performing security verification on the malicious file subjected to the removal; changing a position at which the removal is performed on the suspicious file and updating the removal unit when the malicious file subjected to the removal successfully passes the security verification; updating the suspicious file to be the same as the malicious file subjected to the removal when the malicious file subjected to the removal fails to pass the security verification; returning to the removing a removal unit from a suspicious file in the malicious file and performing security verification on the malicious file subjected to the removal until the removal unit is of a single byte; and determining the malicious file subjected to the removal as the virus signature when the malicious file subjected to the removal fails to pass the security verification.

In an embodiment, the removing a removal unit from a suspicious file in the malicious file includes removing the removal unit from a byte array corresponding to the suspicious file in the malicious file.

In an embodiment, the byte array is stored as a first byte array and a second byte array, and the removing a removal unit from a suspicious file in the malicious file and performing security verification on the malicious file subjected to the removal includes: dividing each of the first byte array and the second byte array into M byte segments based on a removal factor with the M byte segments of the first byte array being the same as the M byte segments of the second byte array respectively; removing first N byte segments from the M byte segments of the first byte array, and performing the security verification on other byte segments among the M byte segments than the removed N byte segments for a first time; and removing first (N+1) byte segments from the M byte segments of the first byte array, and performing the security verification on other byte segments among the M byte segments than the removed (N+1) byte segments for a second time. N is greater than or equal to 1 and less than or equal to M. A sum of products obtained by multiplying the removal unit by individual values of the removal factor is equal to a byte count of the byte array corresponding to the suspicious file.

In an embodiment, the changing a position at which the removing is performed on the suspicious file and updating the removal unit when the malicious file subjected to the removal successfully passes the security verification includes: updating the suspicious file to be the same as an N-th byte segment in the second byte array and increasing the removal factor to update the removal unit when the malicious file subjected to the removal fails to pass the security verification for the first time and the malicious file subjected to the removal successfully passes the security verification for the second time.

In an embodiment, the byte array is stored as a first byte array and a second byte array, and the removing a removal unit from a suspicious file in the malicious file and performing security verification on the malicious file subjected to the removal includes: dividing each of the first byte array and the second byte array into M byte segments based on a removal factor with the M byte segments of the first byte array being the same as the M byte segments of the second byte array respectively; and removing an N-th byte segment from the M byte segments of the first byte array, and performing the security verification on other byte segments among the M byte segments than the removed N-th byte segment. N is greater than or equal to 1 and less than or equal to M. A sum of products obtained by multiplying the removal unit by individual values of the removal factor is equal to a byte count of the byte array corresponding to the suspicious file.

In an embodiment, the changing a position at which the removing is performed on the suspicious file and updating the removal unit when the malicious file subjected to the removal successfully passes the security verification includes: updating the first byte array to be the same as the second byte array; and updating the removal unit. The returning to the removing a removal unit from a suspicious file in the malicious file and performing security verification on the malicious file subjected to the removal includes: removing the removal unit after being updated from a second byte segment in the first byte array; and performing the security verification on the malicious file subjected to the removal.

In an embodiment, the updating the suspicious file to be the same as the malicious file subjected to the removal includes: updating the second byte array to be the same as the first byte array. The returning to the removing a removal unit from a suspicious file in the malicious file and performing security verification on the malicious file subjected to the removal includes: removing a second byte segment from the first byte array; and performing the security verification on the malicious file subjected to the removal.

In an embodiment, the dividing each of the first byte array and the second byte array into M byte segments based on a removal factor with the M byte segments of the first byte array being the same as the M byte segments of the second byte array respectively includes: dividing each of the first byte array and the second byte array into M byte segments based on the removal factor that is constant, with the M byte segments of the first byte array being the same as the M byte segments of the second byte array respectively.

In an embodiment, the dividing each of the first byte array and the second byte array into M byte segments based on a removal factor with the M byte segments of the first byte array being the same as the M byte segments of the second byte array respectively includes: dividing each of the first byte array and the second byte array into M byte segments based on the removal factor that is variable, with the M byte segments of the first byte array being the same as the M byte segments of the second byte array respectively. Each of the M byte segments corresponds to a value of the removal factor.

In an embodiment, the performing security verification on the malicious file subjected to the removal includes: performing the security verification on the malicious file subjected to the removal using a virus database; and/or performing the security verification on the malicious file subjected to the removal by antivirus software.

In an embodiment, the method further includes: decreasing the removal unit and returning to the removing a removal unit from a suspicious file in the malicious file and performing security verification on the malicious file subjected to the removal when the removal unit is of a single byte and the malicious file subjected to the removal successfully passes the security verification or when the malicious file subjected to the removal successfully passes the security verification each time.

A system for extracting a virus signature is further provided according to the present disclosure. The system includes an acquisition module, a first removal verification module, a second removal verification module, a third removal verification module, and an extraction module. The acquisition module is configured to acquire a malicious file. The first removal verification module is configured to remove a removal unit from a suspicious file in the malicious file and perform security verification on the malicious file subjected to the removal. The second removal verification module is configured to change a position at which the removing is performed on the suspicious file and update the removal unit when the malicious file subjected to the removal successfully passes the security verification, and transmit the changed the position and the updated removal unit to the first removal verification module. The third removal verification module is configured to update the suspicious file to be the same as the malicious file subjected to the removal when the malicious file subjected to the removal fails to pass the security verification, and transmit the updated suspicious file suspicious file. The extraction module is configured to determine the malicious file subjected to the removal as the virus signature when the removal unit is of a single byte and the malicious file subjected to the removal fails to pass the security verification.

A computer readable storage medium is further provided according to the present disclosure. The computer readable storage medium stores a computer program that, when being executed by a processor, implements the method described above.

A terminal is further provided according to the present disclosure. The terminal includes a memory and a processor. The memory is configured to store a computer program. The processor is configured to invoke the computer program in the memory to perform the method described above.

The method for extracting a virus signature according to the present disclosure includes: acquiring a malicious file; removing a removal unit from a suspicious file in the malicious file and performing security verification on the malicious file subjected to the removal; changing a position at which the removing is performed on the suspicious file and updating the removal unit when the malicious file subjected to the removal successfully passes the security verification; updating the suspicious file to be the same as the malicious file subjected to the removal when the malicious file subjected to the removal fails to pass the security verification; returning to the removing a removal unit from a suspicious file in the malicious file and performing security verification on the malicious file subjected to the removal until the removal unit is of a single byte; and determining the malicious file subjected to the removal as the virus signature when the malicious file subjected to the removal fails to pass the security verification.

In the present disclosure, the malicious file is shrunk and shrunk, and the security verification is performed immediately after the malicious file is shrunk each time. When the malicious file left successfully passes the security verification, the virus signature is in the removed part. When the malicious file left fails to pass the security verification, the virus signature is in the malicious file left, and the malicious file left is shrunk until the file left successfully passes the security verification. Then, the virus signature is positioned in the removed part. The removed part is shrunk until the removal unit is of a single byte, and then the removal is performed byte by byte, so that the obtained virus signature is minimum. In the present disclosure, the virus signature can be extracted automatically by shrinking and shrinking the malicious file based on a result of the security verification with on input manually. Therefore, verification and analysis are unnecessary, effectively improving the efficiency in extracting the virus signature. A system for extracting a virus signature, a computer readable storage medium and a terminal are also provided, all of which have the above beneficial effects.

### BRIEF DESCRIPTION OF THE DRAWINGS

In order to more clearly describe the technical solutions in the embodiments of the present disclosure or the technical solutions in the conventional technology, drawings to be used in the description of the embodiments of the present disclosure or the conventional technology are briefly described hereinafter. It is apparent that the drawings described below are merely used for describing the embodiments of the present disclosure, and those skilled in the art may obtain other drawings according to the provided drawings without any creative effort.
Figure 1 is a flowchart illustrating a method for extracting a virus signature according to an embodiment of the present disclosure;
Figure 2 is a schematic structural diagram illustrating a system for extracting a virus signature according to an embodiment of the present disclosure; and
Figure 3 is a schematic structural diagram of a terminal according to an embodiment of the present disclosure.

### DETAILED DESCRIPTION OF EMBODIMENTS

In order to make the objective, the technical solutions and advantages of the embodiments of the present disclosure clear, technical solutions of embodiments of the present disclosure are described below in conjunction with the drawings of the embodiments of the present disclosure. Apparently, the embodiments described below are only some embodiments rather than all the embodiments of the present disclosure. Any other embodiments obtained by those skilled in the art based on the embodiments in the present disclosure without any creative effort fall within the protection scope of the present disclosure.

In step S101, a malicious file is acquired.

In this step, the malicious file is acquired. The malicious file may be a file that carries a virus or a file that is already infected by a virus. That is, any file at a risk of virus may be detected as a malicious file.

In step S102, a removal unit is removed from a suspicious file in the malicious file, and security verification is performed on the malicious file subjected to the removal.

In step S103, when the malicious file subjected to the removal successfully passes the security verification, a position at which the removal is performed on the suspicious file is changed and the removal unit is updated. The method proceeds to step S 102 until the removal unit is of a single byte.

In step S104, when the malicious file subjected to the removal fails to pass the security verification, the suspicious file is updated to be the same as the malicious file subjected to the removal. The method proceeds to step S102.

Here, removal is performed on the suspicious file in the malicious file. It should be understood that malicious content may not exist throughout the malicious file, and therefore only the suspicious file in the malicious file is analyzed. Definitely, the malicious file itself may be the suspicious file. Determination of the suspicious file is not limited herein. Whether a file in the malicious file is the suspicious file may be determined based on a file format of the file. For example, a script file is usually an executable file, and thus is potentially dangerous. All script files in the malicious file may be determined as the suspicious file. Alternatively, whether a file in the malicious file is a suspicious file may be determined based on a size of the file, or the like.

Security verification is performed on the determined suspicious file for the purpose of certainty that the suspicious file carries a virus signature. How to perform the security verification is not limited here. The security verification on the determined suspicious file may be based on a virus database. Alternatively, the determined suspicious file may be directly scanned by antivirus software or various antivirus software for a virus, so as to classify the determined suspicious file as a black file or a white file. Here, the black file includes a virus signature, and the white file includes no virus signature. Alternatively, the virus database may be used together with the antivirus software in the security verification on the determined suspicious file in order to improve accuracy in determining whether the suspicious file includes a virus signature.

Removal is performed on the suspicious file, that is, part of the suspicious file is removed. The security verification is then performed on the remains of the malicious file. For details about the subsequent security verification, reference may be made hereto, and thus are not described. The malicious file subjected to the removal, when being determined as the black file through the security verification, includes a virus signature. However, whether the part removed from the suspicious file includes a virus signature depends on comparison between the current and the previous results after the removal. Here, the part of the suspicious file is removed in order to determine a file segment including the virus signature in the suspicious file. The reason for performing security verification on the remains of the malicious file is that once the malicious file subjected to the removal is determined as the white file, the malicious file subjected to the removal is unnecessarily analyzed subsequently and only the part removed previously in which the virus signature is successfully detected is subject to the follow-up removal, thereby minimizing the number of security verifications and improving the efficiency in extracting the virus signature.

After each removal, security verification is performed on the malicious file subjected to the removal. In a case that the malicious file subjected to the removal is determined as the white file, the part removed in this removal includes the virus signature and the malicious file subjected to the removal does not include the virus signature. In this case, the malicious file subjected to the removal is unnecessarily subject to the follow-up removal, and only the part deleted in this removal is subject to the follow-up removal. That is, a position at which the follow-up removal is to be performed on the suspicious file is changed compared to the current removal, the removal unit is updated accordingly, and the follow-up removal is performed. The position for removal is modified in order to search the suspicious file unit by unit for the virus signature.

It can be seen that steps S102 to S104 form a nested loop. That is, the malicious file subjected to the removal after each removal is subject to the security verification. When the malicious file subjected to the removal fails to pass the security verification, the removal unit remains unchanged, a next removal unit is removed after the previous removal, and then the security verification is performed. That is, a removal unit arranged first in the malicious file subjected to the removal is removed, until the malicious file subjected to the removal successfully passes the security verification. Alternatively, when every removal unit except a last removal unit of the suspicious file in the malicious file is removed already, the virus signature may be in the last removal unit. If the malicious file subjected to the removal successfully passes the security verification, the removed removal unit is determined as the suspicious file.

In step S105, the malicious file subjected to the removal is determined as the virus signature when the malicious file subjected to the removal fails to pass the security verification.

The removal unit is decreasing during the proceedings, that is, the malicious file is shrunk and shrunk, so as to obtain the virus signature. The removal unit is of one byte at least. That is, when the removal unit is of 1 byte, the suspicious file is shrunk byte by byte so as to obtain the virus signature of a minimum byte.

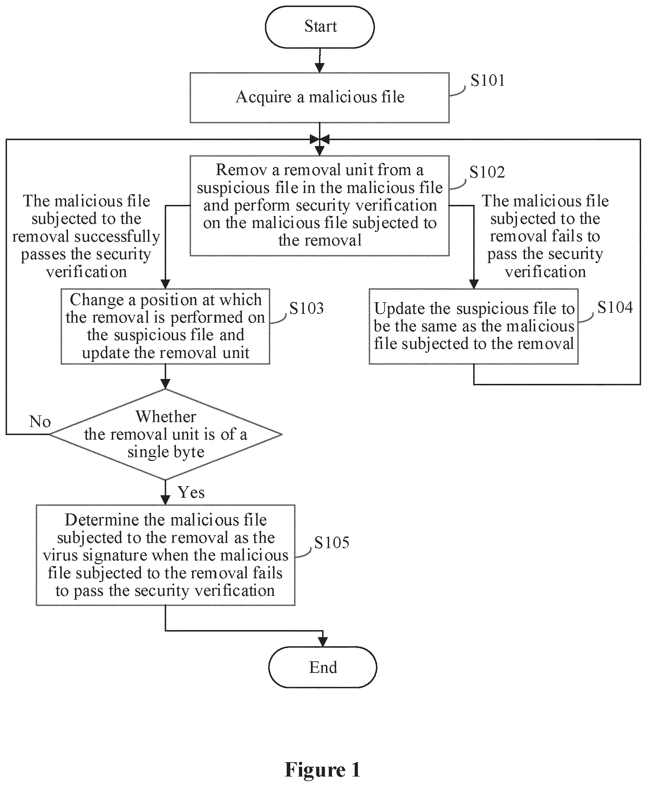

As shown in Figure 1, whether the removal unit is of a single byte is determined immediately after the removal unit is updated in step S103 each time. When the removal unit is updated to be of a single byte, the virus signature of the minimum byte is obtained after this round of shrunk.

In this embodiment of the present disclosure, the malicious file is shrunk and shrunk, and the security verification is performed immediately after the malicious file is shrunk each time. When the malicious file left successfully passes the security verification, the virus signature is in the removed part. When the malicious file left fails to pass the security verification, the virus signature is in the malicious file left, and the malicious file left is shrunk until the shrunk file successfully passes the security verification. Then, the virus signature is positioned in the removed part. The removed part is shrunk until the removal unit is of a single byte, and then the removal is performed byte by byte, so that the obtained virus signature is minimum. In the present disclosure, the virus signature can be extracted automatically by shrinking and shrinking the malicious file based on a result of the security verification with on input manually. Therefore, verification and analysis are unnecessary, effectively improving the efficiency in extracting the virus signature.

Based on the above embodiment, further details about the shrinking the suspicious file so as to obtain the virus signature are described in a preferred embodiment below.

First, the suspicious file in the malicious file is shrunk by the removal unit. The removal unit is the amount to be removed from the suspicious file, and may be constant or variable.

The removal unit depends on a removal factor. The removal factor, based on which the suspicious file is divided into byte segments, may be set by those skilled in the art based on a suspicious file to be divided in practice, and is not descried in detail herein. Generally, the removal factor may be constant or variable. The constant removal factor is applicable to a case that the suspicious file is equally divided into byte segments, so that the obtained byte segments have the same byte count. For example, a suspicious file A includes 1000 bytes. The suspicious file A may be divided into ten byte segments each including 100 bytes with the removal factor being 10. When the suspicious file A is divided by the variable removal factor, the obtained byte segments may have the same byte count or respective byte counts. The difference in the byte count between byte segments should be slight and each byte segment corresponds to a value of the variable removal factor, in order to improve the efficiency in extracting the virus signature. For example, a suspicious file B including 1050 bytes may be divided into ten byte segments, where five byte segments each include 100 bytes and other five byte segments each include 110 bytes, or nine byte segments each includes 100 bytes and one byte segment includes 150 bytes. A range of the variable removal factor may be set by those skilled in the art.

Further description is made below with the byte array corresponding to the suspicious file being stored as a first byte array and a second byte array.

Each of the first byte array and the second byte array is divided into M byte segments, and the M byte segments of the first byte array are the same as the M byte segments of the second byte array respectively. First N byte segments are removed from the first byte array, and then the security verification is performed for the first time on other byte segments among the M byte segments of the first byte array than the removed N byte segments. Subsequently, an (N+1)-th byte segment is removed from the first byte array, and the security verification is performed for the second time on other byte segments among the M byte segments of the first byte array than the removed (N+1) byte segments. N is a positive integer greater than or equal to 1 and less than or equal to M. A sum of products obtained by multiplying the removal unit by individual values of the removal factor is equal to a byte count of the byte array corresponding to the suspicious file. Equal values of the removal factor indicate that the M byte segments are obtained by equally dividing the byte array corresponding to the suspicious file. The byte array of the byte count not a composite number, cannot be divided equally into byte segments. In this case, the byte segments have respective byte counts. The sum of products obtained by multiplying the removal unit by individual values of the removal factor is equal to a byte count of the byte array corresponding to the suspicious file.

When the malicious file subjected to the removal fails to pass the security verification for the first time and the malicious file subjected to the removal successfully passes the security verification for the second time, the suspicious file is updated to be the same as an N-th byte segment in the second byte array. The removal factor is increased to update the removal unit, so as to shrink the updated suspicious file, i.e., the N-th byte segment. An increment in the removal factor means a decrement in the removal unit, i.e., the removal unit is decreasing so that increasing invalid bytes near the virus signature are removed.

One of the first byte array and the second byte array is subject to the shrinking and the other is for restoration. The removed part may include the virus signature and the security verification is performed on the malicious file subjected to the removal. When the malicious file subjected to the removal is determined as the while file, the removed part includes the virus signature. In this case, the malicious file can be restored based on the other of the first byte array and the second byte array. That is, the byte array subjected to the removal is updated to be the same as the byte array before the removal. Alternatively, those skilled in the art may store the suspicious file into more than two byte arrays, which is not limited herein.

After the byte array is divided into byte segments, the removal is performed, i.e., the byte segment is removed. Instead of removing the byte segments one by one, one byte segment is removed for the first time, two byte segments are removed for the second time, and so on. Details are described below.

In step 1, the first byte segment is removed and the security verification is performed on the malicious file subjected to the removal here for the first time.

In step 2, first two byte segments are removed and the security verification is performed on the malicious file subjected to the removal here for the second time.

When the malicious file subjected to the removal is determined as the black file through the security verification performed for the first time and is determined as the while file through the security verification performed for the second time, the second byte segment includes the virus signature. Whether the first byte segment includes a virus signature is unknown. In this case, it is unnecessary to perform the security verification on other byte segments that the first and the second byte segments.

When the malicious file subjected to the removal is determined as the black file through the security verification performed for the first time and is determined as the black file through the security verification performed for the second time, the virus signature exists in neither of the first two byte segments.

In step 3, first three byte segments are removed and the security verification is performed on the malicious file subjected to the removal here for the third time, and so on, unit the byte segment including the virus signature is positioned in the suspicious file.

After the byte segment including the virus signature is determined, the byte segment is determined as the suspicious file. The removal factor and the removal unit are updated, and the above proceedings resume, to obtain the byte segment of decreasing byte count until the removal unit is of a single byte. The malicious file subjected to the removal finally, when failing to pass the security verification, is determined as the virus signature. In practice, a byte involving no virus may be arranged after the virus signature in the malicious file, the malicious file subjected to the removal after each removal may be reversed before the suspicious file is updated, and then the above proceedings resume, thereby preventing a byte involving no virus adjacent to the virus signature.

In practice, the malicious file may include more than one virus signatures and the malicious file subjected to the removal is determined as the black file only when the more than one virus signatures all exist in the malicious file subjected to the removal. Therefore, the above embodiments are applicable to a case where the malicious file subjected to the removal is determined as the black file when one virus signature exists in the malicious file subjected to the removal. Therefore, further details for the removal are described in the present disclosure below.

Each of a first byte array and a second byte array is divided into M byte segments based on a removal factor, and the M byte segments of the first byte array are the same as the M byte segments of the second byte array respectively. An N-th byte segment is removed from the M byte segments of the first byte array, and security verification is performed on other byte segments among the M byte segments of the first byte array than the N-th byte segment. N is greater than or equal to 1 and less than or equal to M. A sum of products obtained by multiplying the removal unit by individual values of the removal factor is equal to a byte count of the byte array corresponding to the suspicious file.

When the other byte segments successfully pass the security verification, the first byte array is updated to be the same as the second byte array, and the removal unit is updated. The updated removal unit is removed from a second byte segment of the first byte array, and then the security verification is performed on the malicious file subjected to the removal.

When the other byte segments fails to pass the security verification, the second byte array is updated to be the same as the first byte array, a second byte segment is removed from the first byte array, and then the security verification is performed on the malicious file subjected to the removal.

In this embodiment, the first byte array is equal to the second byte array, and has been subjected to the same division as the first byte array. Different from the previous embodiment, only one byte segment is removed each time in this embodiment. In the previous embodiment, in a case that the malicious file includes two virus signatures at respective positions, one of the two virus signatures may be removed and the other of the two virus signatures may exist in the malicious file subjected to the removal adjacent byte segments are moved. However, the malicious file subjected to the removal including only one virus signature fails to be determined as the black file. Therefore, only one byte segment is removed each time in this embodiment.

The first byte segment is removed from the first byte array first, and then the security verification is performed on the malicious file subjected to the removal. When the malicious file subjected to the removal successfully passes the security verification, the first byte segment includes the virus signature. In this case, the first byte array is updated to be the same as the second byte array, i.e., is restored to the way it looks before the removal. When the malicious file subjected to the removal fails to pass the security verification, the second byte array is updated to be the same as the first byte array. That is, the first byte segment is considered as including no virus signature.

After that, the above proceedings are performed on the other byte segments including the second byte segment. It should be noted that the removal of the byte segment immediately before the malicious file subjected to the removal successfully passes the security verification can be withdrawn because of the second byte array. A byte segment, when been determined as including a virus signature, remains in the suspicious file until all byte segments are removed. The second byte segment is removed from the first byte array and the security verification is performed on the malicious file subjected to the removal, and then the third byte segment, the fourth byte segment, and so on, to finally obtain byte segments each including a virus signature. Then, each of the obtained byte segments is determined as the suspicious file subject to the above proceedings, until the removal unit is of a single byte, so as to finally obtain the file carrying more than one virus signatures.

It can be seen that in this embodiment, a file carrying multiple virus signatures can be effectively detected, which is a common means of network virus intrusion at present. It is difficult for the computer to identify a single virus signature. When multiple virus signatures are gathered, the computer has the ability to attack viruses. In this embodiment, multiple virus signatures in the malicious file can be effectively identified by removing only one byte segment each time, the extraction of the virus signature is optimized, thereby improving security performance of a network.

Alternatively, those skilled in the art may combine the above two embodiments into one implementation and set the byte arrays of other number, for example, three. Therefore, the extraction of the virus signature is further optimized.

In addition, the removal disclosed herein or other removal derived from the removal herein without creative work should be within the scope of protection of the present disclosure.

In a preferred embodiment, when the removal unit is of a single byte and the malicious file subjected to the removal successfully passes the security verification or when the malicious file subjected to the removal successfully passes the security verification each time, the removal unit is decreased and the method restarts. This means that no virus signature is obtained after the malicious file that should have carried a virus is subjected to the removal. This may be due to a fact that the virus signature is spread between two byte segments or divided into two byte segments in the process and then the malicious file subjected to the removal successfully passes the security verification. In this case, the removal unit is decreased and method restarts for the suspicious file. Apparently, the removal unit may be decreased after all the security verifications in this round are finished. The malicious file subjected to the removal failing to pass the security verification in the previous round indicates that the virus signature exists in the malicious file subjected to the removal. However, the removal unit set in this round is too large, which causes damage to the virus signature during removal, and thus the malicious file subjected to the removal successfully passes the security verification.

A system for extracting a virus signature is described according to an embodiment of the present disclosure below. The system described below and the method described above may be referred to each other.

A system for extracting a virus signature is further provided according to the present disclosure. The system includes an acquisition module, a first removal verification module, a second removal verification module, a third removal verification module, and an extraction module.

The acquisition module is configured to acquire a malicious file.

The first removal verification module is configured to remove a removal unit from a suspicious file in the malicious file and perform security verification on the malicious file subjected to the removal.

The second removal verification module is configured to change a position at which the removing is performed on the suspicious file and update the removal unit when the malicious file subjected to the removal successfully passes the security verification, and transmit the changed the position and the updated removal unit to the first removal verification module.

The third removal verification module is configured to update the suspicious file to be the same as the malicious file subjected to the removal when the malicious file subjected to the removal fails to pass the security verification, and transmit the updated suspicious file suspicious file.

The extraction module is configured to determine the malicious file subjected to the removal as the virus signature when the removal unit is of a single byte and the malicious file subjected to the removal fails to pass the security verification.

Based on the above embodiment, the first removal verification module includes a removal unit according to a preferred embodiment. The removal unit is configured to remove the removal unit from a byte array corresponding to the suspicious file in the malicious file.

Based on the above embodiment, the first removal verification module includes a first removal unit according to a preferred embodiment. The first removal unit is configured to: divide each of a first byte array and a second byte array into M byte segments based on a removal factor with the M byte segments of the first byte array being the same as the M byte segments of the second byte array respectively; remove first N byte segments from the M byte segments of the first byte array, and perform the security verification on other byte segments among the M byte segments than the removed N byte segments for a first time; and remove first (N+1) byte segments from the M byte segments of the first byte array, and perform the security verification on other byte segments among the M byte segments than the removed (N+1) byte segments for a second time. N is greater than or equal to 1 and less than or equal to M. A sum of products obtained by multiplying the removal unit by individual values of the removal factor is equal to a byte count of the byte array corresponding to the suspicious file.

Based on the above embodiment, the second removal verification module includes a first verification unit according to a preferred embodiment. The first verification unit is configured to: update the suspicious file to be the same as an N-th byte segment in the second byte array and increase the removal factor to update the removal unit when the malicious file subjected to the removal fails to pass the security verification for the first time and the malicious file subjected to the removal successfully passes the security verification for the second time.

Based on the above embodiment, the first removal verification module includes a second removal unit according to a preferred embodiment. The second removal unit is configured to: divide each of a first byte array and a second byte array into M byte segments based on a removal factor with the M byte segments of the first byte array being the same as the M byte segments of the second byte array respectively; remove an N-th byte segment from the M byte segments of the first byte array, and perform the security verification on other byte segments among the M byte segments than the removed N-th byte segment. N is greater than or equal to 1 and less than or equal to M. A sum of products obtained by multiplying the removal unit by individual values of the removal factor is equal to a byte count of the byte array corresponding to the suspicious file.

Based on the above embodiments, the second removal verification module includes a second verification unit according to a preferred embodiment. The second verification unit is configured to: update the first byte array to be the same as the second byte array; update the removal unit; remove the removal unit after being updated from a second byte segment in the first byte array; and perform the security verification on the malicious file subjected to the removal.

Based on the above embodiments, the third removal verification module includes a third verification unit according to a preferred embodiment. The third verification unit is configured to: update the second byte array to be the same as the first byte array; remove a second byte segment from the first byte array; and perform the security verification on the malicious file subjected to the removal.

Based on the above embodiments, each of the first removal unit and the second removal unit may include a first removal sub-unit according to a preferred embodiment. The first removal sub-unit is configured to divide each of the first byte array and the second byte array into M byte segments based on the removal factor that is constant, with the M byte segments of the first byte array being the same as the M byte segments of the second byte array respectively.

Based on the above embodiments, each of the first removal unit and the second removal unit may include a second removal sub-unit according to a preferred embodiment. The second removal sub-unit is configured to divide each of the first byte array and the second byte array into M byte segments based on the removal factor that is variable, with the M byte segments of the first byte array being the same as the M byte segments of the second byte array respectively. Each of the M byte segments corresponds to a value of the removal factor.

Based on the above embodiments, the first removal verification module includes a verification unit according to a preferred embodiment. The verification unit is configured to perform the security verification on the malicious file subjected to the removal using a virus database; and/or perform the security verification on the malicious file subjected to the removal by antivirus software.

Based on the above embodiments, the system may further include a re-removal module according to a preferred embodiment. The re-removal module is configured to decrease the removal unit and transmit the decreased removal unit to the first removal verification module.

A computer readable storage medium is further provided according to the present disclosure. The computer readable storage medium stores a computer program that, when being executed, performs the method for extracting a virus signature according to the above embodiments. The storage medium may include various media capable of storing program codes such as a USB flash drive, a removable hard disk, a read-only memory (ROM), a random-access memory (RAM), a disk or an optical disk.

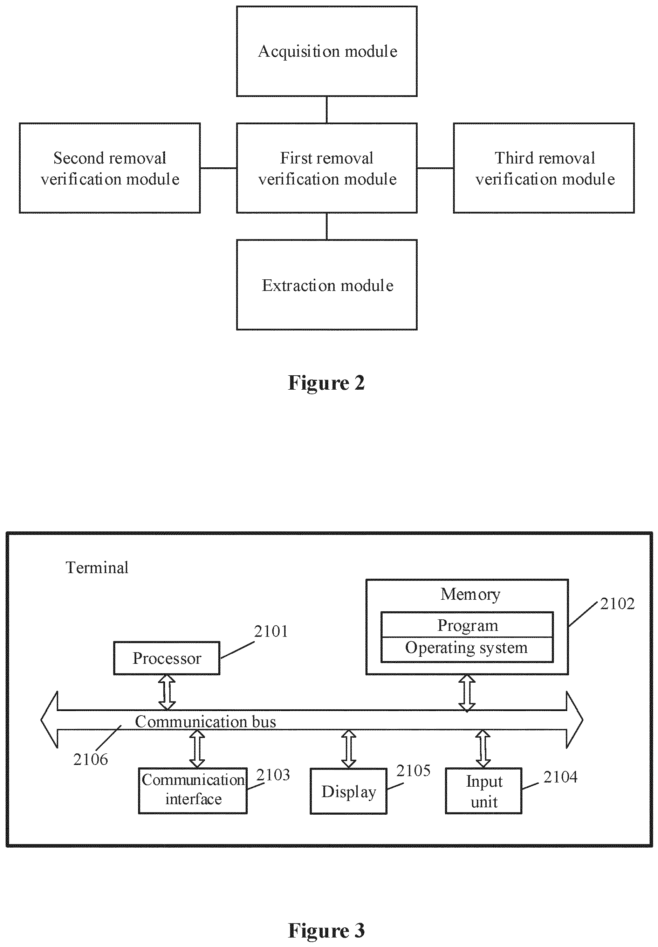

A terminal is further provided according to the present disclosure. The terminal may include a memory and a processor. The memory is configured to store a computer program. The processor is configured to invoke the computer program in the memory to perform the method for extracting a virus signature according to the above embodiments. The terminal may further include components such as various network interfaces and a power supply. Reference is made to Figure 3, which is a structural schematic diagram illustrating the terminal according to the embodiment of the present disclosure. The terminal according to this embodiment may include a processor 2101 and a memory 2102.

In an embodiment, the terminal may further include a communication interface 2103, an input unit 2104, a display 2105 and a communication bus 2106.

The processor 2101, the memory 2102, the communication interface 2103, the input unit 2104, and the display 2105 communicate with each other through the communication bus 2106.

In the embodiment of the present disclosure, the processor 2101 may be a central processing unit (CPU), a specific application integrated circuit, a digital signal processor, a field programmable gate array or other programmable logic devices.

The processor is capable of invoking the program stored in the memory 2102. The processor is capable of performing the operation performed by the terminal in the above embodiments.

The memory 2102 is configured to store one or more programs. The program may include program codes, and the program codes include computer operation instructions. The memory according to the embodiment of the present disclosure stores at least a program for: acquiring a malicious file; removing a removal unit from a suspicious file in the malicious file and performing security verification on the malicious file subjected to the removal; changing a position at which the removing is performed on the suspicious file and updating the removal unit when the malicious file subjected to the removal successfully passes the security verification; updating the suspicious file to be the same as the malicious file subjected to the removal when the malicious file subjected to the removal fails to pass the security verification; returning to the removing a removal unit from a suspicious file in the malicious file and performing security verification on the malicious file subjected to the removal until the removal unit is of a single byte; and determining the malicious file subjected to the removal as the virus signature when the malicious file subjected to the removal fails to pass the security verification.

In an embodiment, the memory 2102 may include a program storage area and a data storage area. The program storage area may store an operating system, an application program required by at least one function (such as the topic detection function), and the like. The data storage area may store data created during use of a computer.

In addition, the memory 2102 may include a high-speed random-access memory and may further include a non-volatile memory, such as at least one disk memory device or other volatile solid-state storage device.

The communication interface 2103 may be an interface of the communication module, such as an interface of a GSM module.

The terminal according to the present disclosure may further include a display 2105, an input unit 2104, and the like.

The structure of the terminal shown in Figure 3 does not constitute a limitation of the terminal according to the embodiments of the present disclosure. In practice, the terminal may include more or less components than those shown in Figure 3, or some components may be combined.

The embodiments of the present disclosure are described in a progressive manner, each embodiment focuses on differences from other embodiments, and the same or similar parts between the various embodiments may be referred to each other. Since the system disclosed in the embodiments corresponds to the method disclosed in the embodiments, the description of the system is relatively simple, and the relevant parts can be referred to the details in the method embodiments.

In the present disclosure, specific examples are used to explain the principle and implementation of the present disclosure. The above embodiments are illustrated for only the purposes of helping understand the method and core idea of the present disclosure. It should be pointed out that those skilled in the art may make several improvements and modifications to the present disclosure without departing from the principle of the present disclosure, and these improvements and modifications fall within the protection scope of the claims of the present disclosure.

It should also be noted that in the specification, relational terms such as "first" and "second" are merely for distinguishing one entity or operation from another, rather than indicating or implying an actual relationship or order of these entities or operations. In addition, terms of "include", "comprise" or any other variants are intended to be non-exclusive. Therefore, a process, method, article or device including multiple elements includes not only the elements but also other elements that are not enumerated, or also include the elements inherent for the process, method, article or device. Unless expressively limited otherwise, the statement "comprising (including) one..." does not exclude the case that other similar elements may exist in the process, method, article or device.

## Claims

1. A method for extracting a virus signature, comprising:
acquiring a malicious file;
removing a removal unit from a suspicious file in the malicious file and performing security verification on the malicious file subjected to the removal;
changing a position at which the removal is performed on the suspicious file and updating the removal unit when the malicious file subjected to the removal successfully passes the security verification;
updating the suspicious file to be the same as the malicious file subjected to the removal when the malicious file subjected to the removal fails to pass the security verification;
returning to the removing a removal unit from a suspicious file in the malicious file and performing security verification on the malicious file subjected to the removal until the removal unit is of a single byte; and
determining the malicious file subjected to the removal as the virus signature when the malicious file subjected to the removal fails to pass the security verification.

2. The method according to claim 1, wherein the removing a removal unit from a suspicious file in the malicious file comprises:
removing the removal unit from a byte array corresponding to the suspicious file in the malicious file.

3. The method according to claim 2, wherein the byte array is stored as a first byte array and a second byte array, and wherein the removing a removal unit from a suspicious file in the malicious file and performing security verification on the malicious file subjected to the removal comprises:
dividing each of the first byte array and the second byte array into M byte segments based on a removal factor, with the M byte segments of the first byte array being the same as the M byte segments of the second byte array respectively;
removing first N byte segments from the M byte segments of the first byte array, and performing the security verification on other byte segments among the M byte segments than the removed N byte segments for a first time; and
removing first (N+1) byte segments from the M byte segments of the first byte array, and performing the security verification on other byte segments among the M byte segments than the removed (N+1) byte segments for a second time, wherein
N is greater than or equal to 1 and less than or equal to M; and
a sum of products obtained by multiplying the removal unit by individual values of the removal factor is equal to a byte count of the byte array corresponding to the suspicious file.

4. The method according to claim 3, wherein the changing a position at which the removing is performed on the suspicious file and updating the removal unit when the malicious file subjected to the removal successfully passes the security verification comprises:
updating the suspicious file to be the same as an N-th byte segment in the second byte array and increasing the removal factor to update the removal unit when the malicious file subjected to the removal fails to pass the security verification for the first time and successfully passes the security verification for the second time.

5. The method according to claim 2, wherein the byte array is stored as a first byte array and a second byte array, and wherein the removing a removal unit from a suspicious file in the malicious file and performing security verification on the malicious file subjected to the removal comprises:
dividing each of the first byte array and the second byte array into M byte segments based on a removal factor, with the M byte segments of the first byte array being the same as the M byte segments of the second byte array respectively; and
removing an N-th byte segment from the M byte segments of the first byte array, and performing the security verification on other byte segments among the M byte segments of the first byte array than the removed N-th byte segment, wherein
N is greater than or equal to 1 and less than or equal to M; and
a sum of products obtained by multiplying the removal unit by individual values of the removal factor is equal to a byte count of the byte array corresponding to the suspicious file.

6. The method according to claim 5, wherein
the changing a position at which the removing is performed on the suspicious file and updating the removal unit when the malicious file subjected to the removal successfully passes the security verification comprises:
updating the first byte array to be the same as the second byte array; and
updating the removal unit;
and wherein the returning to the removing a removal unit from a suspicious file in the malicious file and performing security verification on the malicious file subjected to the removal comprises:
removing the removal unit after being updated from a second byte segment in the first byte array; and
performing the security verification on the malicious file subjected to the removal.

7. The method according to claim 5, wherein
the updating the suspicious file to be the same as the malicious file subjected to the removal comprises:
updating the second byte array to be the same as the first byte array;
and wherein the returning to the removing a removal unit from a suspicious file in the malicious file and performing security verification on the malicious file subjected to the removal comprises:
removing a second byte segment from the first byte array; and
performing the security verification on the malicious file subjected to the removal.

8. The method according to any one of claims 3 to 7, wherein the dividing each of the first byte array and the second byte array into M byte segments based on a removal factor with the M byte segments of the first byte array being the same as the M byte segments of the second byte array respectively comprises:
dividing each of the first byte array and the second byte array into M byte segments based on the removal factor that is constant, with the M byte segments of the first byte array being the same as the M byte segments of the second byte array respectively.

9. The method according to any one of claims 3 to 7, wherein the dividing each of the first byte array and the second byte array into M byte segments based on a removal factor with the M byte segments of the first byte array being the same as the M byte segments of the second byte array respectively comprises:
dividing each of the first byte array and the second byte array into M byte segments based on the removal factor that is variable, with the M byte segments of the first byte array being the same as the M byte segments of the second byte array respectively, wherein each of the M byte segments corresponds to a value of the removal factor.

10. The method according to claim 1, wherein the performing security verification on the malicious file subjected to the removal comprises:
performing the security verification on the malicious file subjected to the removal using a virus database; and/or
performing the security verification on the malicious file subjected to the removal by antivirus software.

11. The method according to claim 1, further comprising:
decreasing the removal unit and returning to the removing a removal unit from a suspicious file in the malicious file and performing security verification on the malicious file subjected to the removal, when the removal unit is of a single byte and the malicious file subjected to the removal successfully passes the security verification or when the malicious file subjected to the removal successfully passes the security verification each time.

12. A system for extracting a virus signature, comprising:
an acquisition module configured to acquire a malicious file;
a first removal verification module configured to remove a removal unit from a suspicious file in the malicious file and perform security verification on the malicious file subjected to the removal;
a second removal verification module configured to change a position at which the removing is performed on the suspicious file and update the removal unit when the malicious file subjected to the removal successfully passes the security verification, and transmit the changed the position and the updated removal unit to the first removal verification module;
a third removal verification module configured to update the suspicious file to be the same as the malicious file subjected to the removal when the malicious file subjected to the removal fails to pass the security verification, and transmit the updated suspicious file suspicious file; and
an extraction module configured to determine the malicious file subjected to the removal as the virus signature when the removal unit is of a single byte and the malicious file subjected to the removal fails to pass the security verification.

13. A computer readable storage medium, wherein the computer readable storage medium stores a computer program that, when being executed by a processor, implements the method according to any one of claims 1 to 11.

14. A terminal, comprising:
a memory configured to store a computer program; and
a processor configured to invoke the computer program in the memory, to implement the method according to any one of claims 1 to 11.
